Europäisches Patentamt

(19) European Patent Office

Office européen des brevets

(11) Publication number: **0 065 584**

A1

## (12) EUROPEAN PATENT APPLICATION

(21) Application number: **81103997.3**

(22) Date of filing: **25.05.81**

(51) Int. Cl.³: **B 01 D 53/34**
**B 01 D 53/18**

(43) Date of publication of application:
**01.12.82 Bulletin 82/48**

(84) Designated Contracting States:
**AT DE NL SE**

(71) Applicant: **Steuler- Industriewerke GmbH**

**D-5410 Höhr-Grenzhausen(DE)**

(72) Inventor: **Zakrzewski, Erhard**
**Rathausstrasse 54**
**D-5410 Höhr-Grenzhausen(DE)**

(74) Representative: **Hemmerich, Friedrich Werner**
**Patentanwälte**
**HEMMERICH-MÜLLER-GROSSE-POLLMEIER Berliner**
**Allee 41**
**D-4000 Düsseldorf 1(DE)**

(54) Process for the separation of air components, such as difficultly absorbable air impurities, out of air-gas mixtures.

(57) An apparatus and process for separating and removing from air chemical impurities which are difficult to be absorbed, the apparatus for carrying out the process comprising a reaction tower (1) into which the air-gas mixture is fed, aperture means (1b) in a wall of the tower, at least one filter means (2) positioned in the reaction tower, means for distributing (5) an absorbent medium onto the filter, collecting means (9) beneath the filter for the collection of the absorbent medium passing through the filter, and fan means (12) provided in the aperture for creating a flow of air through the reaction tower for the separation of substantially all of the impurities therefrom. As an absorbant medium caustic soda, sodium hypochlorite, water, hydrogen peroxide and mixtures thereof are particularly useful in the process.

Fig. 1

22 912 h.mar          81103997.3          17.08.1981

STEULER-INDUSTRIEWERKE GMBH, D-5410 Höhr-Grenzhausen

Process for the separation of air components, such as
difficultly absorbable air impurities, out of air-gas
mixtures

The invention relates to a process for the separation of
air components, such as difficultly absorbable air impurities,
out of air-gas mixtures by ringing the mixture together with
absorbents and to apparatuses for carrying out this process.

Air-gas mixtures with air components such for example as
nitrous gases, hydrogen chloride, sulphur dioxide, hydrogen
sulphide, mercaptans, amines were hitherto usually brought
together with the absorbents, for example caustic soda,
caustic soda - sodium hypochlorite, water or hydrogen peroxide,
in absorption installations with plate columns, packed
columns, spray washers or Venturi washers. The degree of
separation achieved with such installations, in dependence
upon the nature of the separated medium and the selected form
of installation, was poor, adequate, but sometimes even good.
With the spray or Venturi washers for nitrogen dioxide and
nitrogen triooxide it was possible to achieve degrees of
separation in the order of magnitude of 30 to 70 %; however
higher degrees of separation up to 80 % were achievable only
when using very expensive installations, for example 10-storey
plate columns or packed columns with packings of 4 to 6 m.
Very low degrees of separation resulted in the case of nitrogen
oxide; when using caustic soda or water as absorbent they
lay below 10 % and could not be increased beyond 30 % even in
the case of caustic soda - sodium hypochlorite and hydrogen
peroxide.
The invention is based upon the problem, dispensing with
the use of expensive plate columns or packed columns, of
achieving significantly higher degrees of separation with
relatively low expense and at the same time also separating other difficultly absorbable air constituents, for example
soluble sublimates such as ammonium chloride, ammonium bifluoride, indium chloride and zinc chloride, with good degrees
of separation. Even difficultly absorbable aerosols of oils,
fats and plasticisers, which are emulsifiable in the aqueous
phase, can be separated with high degrees of separation.
Sulphuric acid aerosols and sulphur trioxide, which ordinarily
are absorbed in high-percentage sulphuric acid, are to be
absorbable with water.

The problem is solved in that air with one or more of the
above-listed constituents is brought together, in passage
through one or more packs of stratified filter mats of
chemical-proof unwoven fabrics with the absorbents, as for
example caustic soda, sodium hypochlorite, hydrogen peroxide
or water. The packs of filter mats are here compressed to
10 to 50 % or more of their initial volume in dependence upon
the concentration of the substances to be separated in the
air-gas mixture. The metering of the quantities of absorption medium to be fed to the air-gas mixture takes place,
as proposed by the invention, by regulation of pH or oxidation-reduction or by colorimetric measurement. It is
possible in accordance with the invention, in the case of
feed of hydrogen peroxide to a mixture of nitric acid
separated with nitrile gases, by the use of hydrogen peroxide
solutions of high concentration, to separate out nitric
acid in a concentration suitable for re-use in the initial
process.

The apparatus for carrying out the process in a reaction
tower with feed of the air-gas mixture from above or from
beneath consists in accordance with the invention of spray
nozzles for the absorbent arranged above a pack of filter
mats arranged in the tower cross-section, a collecting
vessel arranged beneath the pack of filter mats with overflow and discharge to a circulating pump, and an inwardly
or outwardly blowing fan arranged above or below the pack of filter mats in an opening of the tower wall and, in
the case of an inwardly blowing fan, a discharge pipe
leading through the pack of filtermats out of the tower.
The apparatus can also consist of two packs of filter
mats arranged with spacing one above the other and a
second collecting vessel arranged between the two packs
and connected with a further circulating pump to the
collecting vessel.
The invention will be explained in greater detail by
reference to the examples of embodiment illustrated in
the drawing and the experimental results achievable
therewith. In the drawing: -
Fig. 1 shows an absorption installation with reaction
        tower, in diagrammatic representation,
Fig. 2 shows another form of embodiment and
Fig. 3 shows a further form of embodiment of the installation.


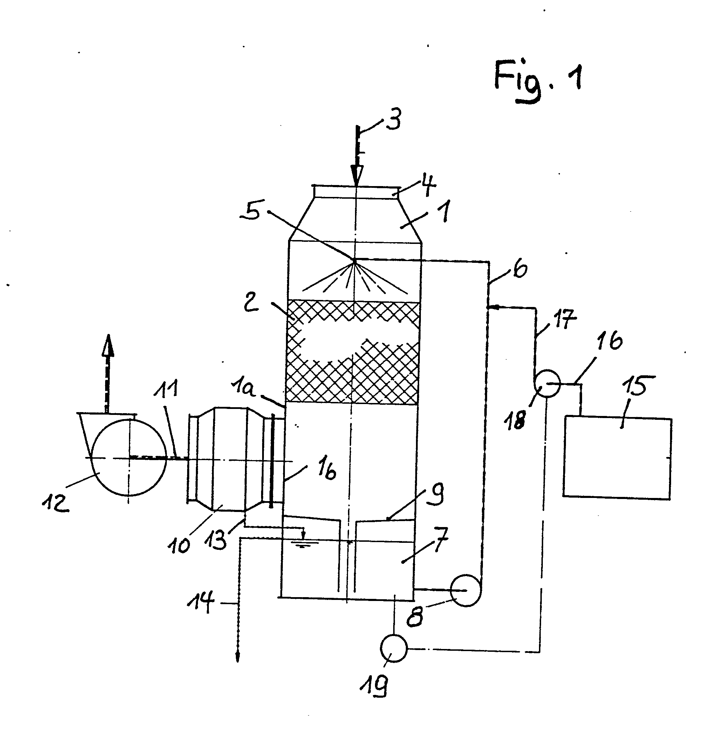

As may be seen from Figure 1, the filter mat pack 2 formed
from layers of unwoven fabrics is arranged in the reaction
tower 1 beneath the inlet pipe 4 for the air-gas mixture
which enters the tower in the direction of the arrow marked
3. Above the filter mat pack 2 in the tower a spray nozzle
5 is arranged from which the absorbent issues and charges
the upper side of the filter mat pack 2. The spray nozzle 5
is connected through a conduit 6 with the collecting vessel
7 situated at the bottom of the tower 1 at a distance below
the filter mat pack 2. In the conduit 6 a circulating pump 8
is arranged. The collecting vessel 7 has a collecting hopper
9. Between this hopper 9 and the under side of the filter
mat pack 2 and aperture 1b is provided in the wall 1a of
the tower 1, which aperture is joined by a droplet separator 10 which leads by way of a conduit indicated by 11
to the fan 12. Between the droplet separator 10 and the
collecting vessel 7 a discharge conduit 13 is arranged.
The overflow of the collecting vessel 7 is marked by 14.
The absorbent medium is fed from a reservoir 15 through conduits 16 and 17 by means of the pump 18 to the conduit 6 and the spray nozzle 5. Regulation of feed is
controlled by the measuring and regulating unit 19.

The air-gas mixture passes in the direction of the arrow
3 into the reaction tower 1 and is brought together with
the absorbent in the filter mat pack 2, which is impregnated with the absorbent sprayed on through the nozzle 5.
The combined material produced from bringing together,
after it has left the filter mat pack, travels by way of
the collecting hopper 9 into the collecting vessel 7 while
the air and slight liquid constituents still contained
therein depart from the reaction tower 1 through the aperture 1b. The liquid residues are precipitated in the
droplet separator and pass likewise through the conduit 13
into the collecting vessel, while the finally purified air
is blown away through the conduit 11 by the fan 12.

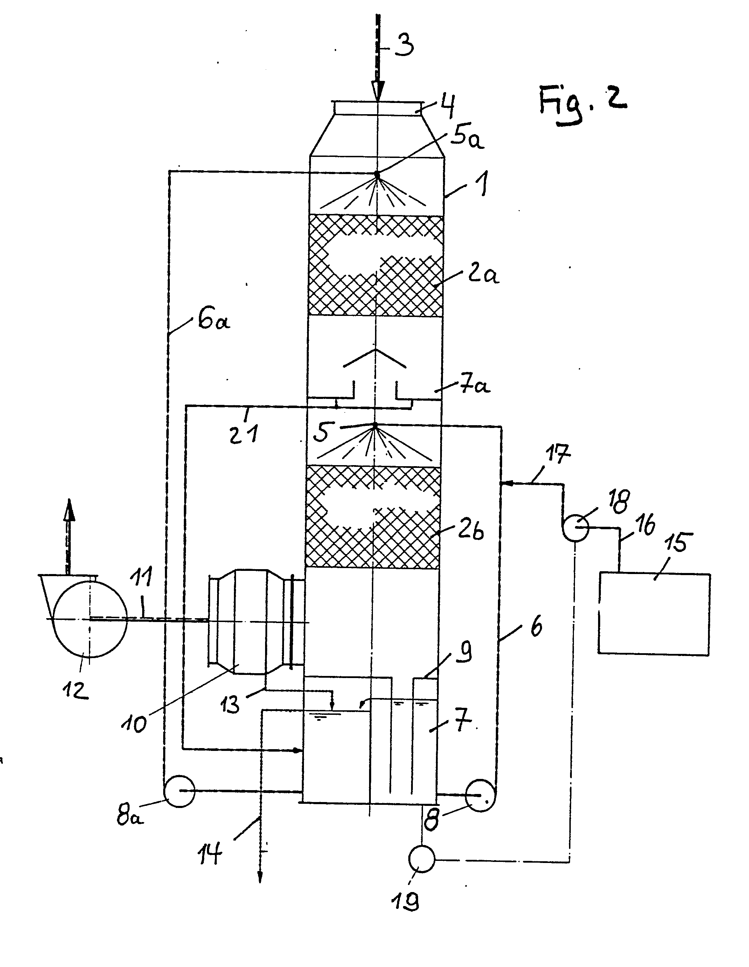

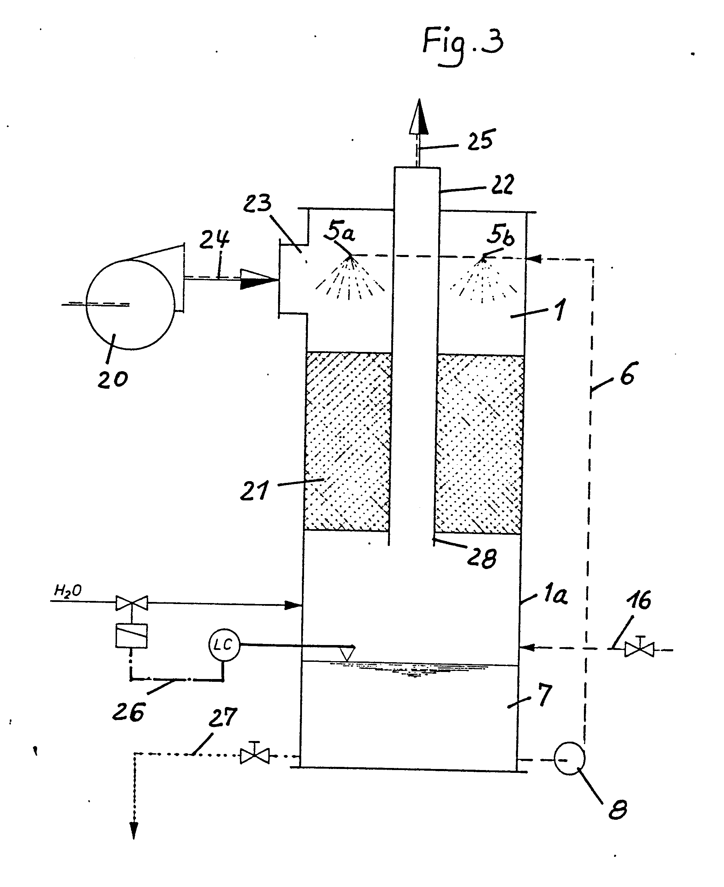

In the embodiment according to Figure 2, two filter mat
packs 2a and 2b are provided arranged one above the other
with spacing. Between these a further collecting vessel 7a
is arranged which is connected through a conduit 21 with
the collecting vessel 7 arranged at the bottom of the
reaction tower 1. From the collecting vessel 7 a second
conduit 6a leads to the spray nozzle 5a arran ged above
the upper filter mat pack 2a.
Otherwise the installation has the same features as that
illustrated in Figure 1.
In the embodiment according to Figure 3 the filter mat
pack 21 is likewise arranged in the reaction tower 1 beneath the inlet nozzle, here marked by 23, for the air-
gas mixture which is blown into the tower in the direction
of the arrow 24 by the fan 20. Above the filter mat pack 21
here several spray nozzles 5a and 5b are arranged which
are likewise in communication through a conduit 6 and a
circulating pump 8 with the collecting vessel 7 arranged at the bottom of the tower 1 at a distance below the filter mat pack 21. The collecting vessel 7 is provided with a level regulator 26; it is fed through a conduit 16 with fresh absorbent media and further has an outlet conduit 27. A withdrawal pipe 22, which leads out of the tower 1 in the direction of the arrow 25, is conducted centrally through the filter mat pack 21.

The air-gas mixture introduced into the tower 1 by the fan 20 in the direction of the arrow 24 is impregnated with the sprayed-on absorbent medium in the filter mat pack 21 and the occurring combination, after it has left the filter mat pack 21, passes as in the already described apparatuses into the collecting vessel 7, while the air and slight liquid constituents still contained therein depart from the reaction tower 1 through the withdrawal pipe 22 in the direction of the arrow 25.

In the operation of the apparatus for the process as described, as shown by the following comparisons in Table form, with the various kinds of absorbent media significantly higher degrees of separation were achieved in each case. In the case of caustic soda, caustic soda - hypochlorite and water, hydrogen peroxide these usually lie at the highest achievable limit of 90 to 99.9 %. In the separation of nitrogen oxide using hydrogen peroxide as absorbent, the increase of the degree of separation in comparison with the results achievable with other installations is especially distinct, since here it was possible to achieve 90 to 95 %, compared with 30 % and less. These results in the use of hydrogen peroxide are of especially great economic significance because the recovery of nitric acid, saving neutralisation and decontamination costs for oxidation of the formed nitrite, produced in the case of absorption of nitrogen dioxide a 44 % nitric acid, in the absorption of nitrogen trioxide a 26 % nitric acid and in the absorption of nitrogen oxide even a 17 % nitric acid. When using still more highly concentrated hydrogen peroxide solutions it was
also possible to produce nitric acids of correspondingly
higher percentage.

- 7 -

**0065584**

Comparison Table I

Degrees of separation of nitrogen dioxide $NO_2$

| Absorbent agent | Caustic soda | Caustic soda-sodium hypo-chlorite | Water | Water hydrogen peroxide |
|---|---|---|---|---|
| Washer type | | | | |
| 10-storey plate column | 60-80% | 60-80% | 40-60% | 60-80% |
| Packed column 4-6 m pile | 60-80% | 60-80% | 40-60% | 40-70% |
| Spray washer | 30-50% | 30-50% | 10-30% | 30-50% |
| Venturi washer | 40-70% | 40-70% | 30-50% | 30-60% |
| Filter mat washer | 90-98% | 95-99.5% | 70-80% | 95-99.9% |

Comparison Table II

Degrees of separation of nitrogen trioxide $N_2O_3$ or $NO_2/NO$ in molar ratio 1:1

| Absorbent agent | Caustic soda | Caustic soda-sodium hypo-chlorite | Water | Water hydrogen peroxide |
|---|---|---|---|---|
| 10-storey plate column | 60-80% | 60-80% | 20-50% | 40-60% |
| Packed column 4-6 m pile | 60-80% | 60-80% | 20-50% | 40-60% |
| Spray washer | 30-50% | 30-50% | 10-30% | 20-50% |
| Venturi washer | 40-60% | 40-60% | 10-40% | 20-50% |
| Filter mat washer | 90-99% | 95-99.5% | 50-70% | 95-99.9% |

0065584

Comparision Table III
_____

Degrees of separation of nitrogen oxide NO

| Absorbent agent | Caustic soda | Caustic soda-sodium hypochlorite | Water | Water hydrogen peroxide |
|---|---|---|---|---|
| 10-storey plate column | 0-10% | 0-30% | 0-10% | 0-30% |
| Packed column 4-6 m pile | 0-10% | 0-30% | 0-10% | 0-30% |
| Spray washer | 0-10% | 0-20% | 0-10% | 0-20% |
| Venturi washer | 0-10% | 0-30% | 0-10% | 0-30% |
| Filter mat washer | 0-20% | 50-70% | 0-10% | 90-95% |

For the absorption of various air constituents with hydrogen peroxide or caustic soda, with a sprinkling density of 20 cu.m/sq.m. x $\underline{h}$ the packing height of the filter mats in the case of $SO_2$ was compressed from 0.3 to 0.15 m., for $SO_3$ from 1.80 to 0.60 m. and for ammonium chloride and other sublimates form 0.60 to 0.30 m.

STEULER-INDUSTRIEWERKE GMBH, D-5410 Höhr-Grenzhausen

Claims

1. Process for the separation of air constituents such as
   difficultly absorbable air impurities out of air-gas
   mixtures by bringing together of the mixture with absorbent media, characterised in that the air with constituents such as nitrous gases, hydrogen chloride,
   sulphur dioxide, hydrogen sulphide, mercaptans, amines,
   suluble sublimates such as ammonium chloride, ammonium
   bifluoride, indium chloride, zinc chloride, aerosols,
   of oils, fats or plasticisers, sulphuric acid aerosols,
   sulphur trioxide, is brought together with the absorbent
   media such as caustic soda, sodium hypochlorite, water,
   hydrogen peroxide inpassage through one or more packs
   of stratified filter mats of chemical-proof unwoven
   fabrics.

2. Process according to Claim 1, characterised in that
   the filter mat packs (2) are compressed to 10 to 50%
   or more of their initial volume in dependence upon the
   concentration of the substances to be separated in the
   air-gas mixture.

3. Process according to Claims 1 and 2, characterised in
   that the metering of the quantities of absorbent media
   to be fed to the air-gas mixture is effected by regulation of pH value or oxidation-reduction or by colorimetric measurement.

4. Process according to Claims 1 to 3, characterised in that
   when hydrogen peroxide is fed to a mixture of nitric
   acid separated with nitrous gases, by the use of Hydrogen
   peroxide solutions of high concentration, nitric acid
   is separated in a concentration suitable for further use
   in the starting process.

5. Process according to Claims 1 to 3, characterised in that air with constituents of aerosols, for example of oils, fats, plasticisers, emulsifiable in aqueous phase, is brought together with water as absorption medium.

6. Apparatus for carrying out the process according to Claims 1 to 5 in a reaction tower with feed of the air-gas mixture from above or from beneath, characterised by spray nozzles (5 or 5a, 5b) for the absorption medium, arranged above a filter mat pack (2 or 21) arranged in the tower cross-section, a collecting vessel arranged beneath the filter mat pack (2 or 21) with overflow (14) and outlet to a circulating pump (8), an outwardly or inwardly blowing fan (11 or 20) arranged above or beneath the filter mat pack (2 or 21) in an aperture (1b or 23) of the tower wall, and in the case of an inwardly blowing fan (20), a withdrawal pipe (28) leading out of the tower (1) through the filter mat pack (21).

Fig. 1

Fig. 2

Fig.3

| European Patent Office | EUROPEAN SEARCH REPORT | Application number |
| --- | --- | --- |
| | | EP 81 10 3997 |

| DOCUMENTS CONSIDERED TO BE RELEVANT | | | CLASSIFICATION OF THE APPLICATION (Int. Cl. ³) |
| --- | --- | --- | --- |
| Category | Citation of document with indication, where appropriate, of relevant passages | Relevant to claim | |
| | DE - A - 2 818 473 (NUKEM GMBH) <br> * Page 3, line 12 - page 4, line 17; claim 6; figure * <br><br> -- <br><br> US - A -3 961 019 (SHINOBU, SATOH) <br> * Column 4, line 48 - column 5, line 6; figure 1 * <br><br> -- <br><br> DE - A - 2 606 910 (JANSON, B. BROMMA et al.) <br> * Page 3, line 23 - page 5, last line; claim 1; figure * <br><br> -- <br><br> US - A - 3 268 296 (MYRON, C. HALL et al.) <br> * Column 1, lines 56-66; column 3, lines 27-75 * <br><br> -- | 1,4,6 <br><br><br><br><br> 1 <br><br><br><br><br> 1 <br><br><br><br><br><br> 1,6 | B 01 D 53/34 <br> 53/18 <br><br><br><br><br><br><br> **TECHNICAL FIELDS SEARCHED (Int.Cl.³)** <br><br> B 01 D 53/18 <br> 53/34 <br> 47/12 |
| A | DE - A - 1 916 271 (BAYER AG) | 1 | |
| A | DE - A - 2 513 349 (GUNTHER WOLTERSDORF) <br><br> ---- | | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| The present search report has been drawn up for all claims | | |
| --- | --- | --- |
| Place of search | Date of completion of the search | Examiner |
| The Hague | 11-01-1982 | HOFER |

EPO Form 1503.1 06.78